# EUROPÄISCHE PATENTSCHRIFT

(11) **EP 3 927 512 B1**
(45) Veröffentlichungstag und Bekanntmachung des Hinweises auf die Patenterteilung: **25.11.2026**
(21) Anmeldenummer: 20709508.4
(22) Anmeldetag: 21.02.2020
(51) Int. Cl.: B27D 1/08

(54) **VERFAHREN UND VORRICHTUNG ZUM HERSTELLEN EINES HOLZPROFILS UND HOLZPROFIL**
PROCESS AND DEVICE TO PRODUCT A WOOD PROFILE AND WOOD PROFILE
PROCEDE ET DISPOSITIF POUR LA FABRICATION D'UN PROFIL EN BOIS, PROFIL EN BOIS

(30) Priorität: 22.02.2019 DE 102019202468; 22.05.2019 DE 102019113686
(43) Veröffentlichungstag der Anmeldung: 29.12.2021
(73) Patentinhaber: Wooden-3D-Tubing UG (haftungsbeschränkt), 90607 Rückersdorf (DE)
(72) Erfinder: MATTERN, Yves, 90607 Rückersdorf (DE); STROBEL, Philipp, 90607 Rückersdorf (DE)
(74) Vertreter: Paustian & Partner Patentanwälte mbB
(86) Internationale Anmeldenummer: PCT/EP2020/054694
(87) Internationale Veröffentlichungsnummer: WO 2020/169836

(56) Entgegenhaltungen:
- EP-A2- 1 452 659
- WO-A2-02/092300
- WO-A2-2009/016552
- CA-A- 472 603
- GB-A- 1 462 587
- GB-A- 504 025
- US-A- 2 428 325
- US-A1- 2007 113 396

## Beschreibung

Die Erfindung betrifft ein Verfahren und eine Vorrichtung zum Herstellen eines Holzprofils mit zwei oder mehr Holz-Furnierlagen, gemäß den Oberbegriffen der Ansprüche 1 und 10. Ein solches Verfahren und eine solche Vorrichtung sind aus dem Dokument EP 1452659 A2 bekannt.

Ein bekanntes Beispiel für Holzprofile mit zwei oder mehr Holz-Furnierlagen sind Sperrholzplatten. Diese werden typischerweise hergestellt, indem auf mehrere Furnierlagen ein geeigneter Klebstoff aufgebracht wird, diese Furnierlagen aufeinandergelegt und anschließend - meist am Ort des Aufeinanderlegens - mittels einer geeigneten Presse verpresst werden.

Allerdings sind die Rüst-, Beschickungs- und Prozesszeiten für derartige Profile verhältnismäßig hoch, sodass für eine Fertigung in hoher Stückzahl eine hohe Redundanz an gleichartigen Fertigungseinrichtungen vorgesehen sein muss.

GB 1 462 587 A offenbart das Aufbringen eines Furniers bzw. einer Beschichtung auf eine Leiste. Dabei wird die Leiste durch eine Serie von Gerüsten mit Andruckrollen geschickt, welche das Furnier nach und nach um die zu beschichtende Leiste biegen und auf dieser andrücken. EP 1 452 659 A2 offenbart ein Verfahren zum Herstellen von Stäben mit massivem Querschnitt aus übereinander gelegten und verleimten Schichten aus Bambusstreifen. US 2007 / 113396 A1 offenbart ein Aufbringen eines Furniers bzw. einer Beschichtung auf eine gewellte Leiste vermittels eines Rollengerüsts, das federvorgespannte Rollen aufweist.

Aus der DE 651 066 A ist bekannt, bei fortlaufender Bewegung der Baustoffe die Mittellagen mit Leim zu versehen, mit den Deckfurnieren zu vereinigen und unter Wärme in einen Walzenpresstisch zusammenzupressen. Ein solches Verfahren kann aber ausschließlich zur Herstellung von ebenen Furnierplatten wie beispielsweise Sperrholzplatten verwendet werden.

Vor diesem Hintergrund ist es eine Aufgabe der Erfindung, ein Verfahren und eine Vorrichtung zum Herstellen eines Holzprofils mit zwei oder mehr Holz-Furnierlagen zu verbessern. Es ist ferner eine Aufgabe der Erfindung, ein Holzprofil mit zwei oder mehr Holz-Furnierlagen zu verbessern.

Diese Aufgaben werden gelöst durch ein Verfahren mit den Merkmalen von Anspruch 1 und eine Vorrichtung mit den Merkmalen von Anspruch 10. Ein verbessertes Holzprofil ist Gegenstand von Anspruch 13. Die abhängigen Ansprüche betreffen vorteilhafte Ausführungen der Erfindung.

Gemäß einem Aspekt der Erfindung wird ein Verfahren zum Herstellen eines Holzprofils mit, insbesondere aus, zwei oder mehr Holz-Furnierlagen bereitgestellt. Das Holzprofil kann also neben den Furnierlagen auch andere Komponenten, beispielsweise Lagen aus anderen Materialien und/oder Klebstoff aufweisen - muss aber nicht.

Die Holzprofile können mit einer oder mehreren Arten Holzfurnier hergestellt werden. Gemäß unterschiedlichen Ausführungen können dabei Furniere aus Laubhölzern und/oder Nadelhölzern sortenrein oder - entsprechend den Anforderungen an das Holzprofil - kombiniert verwendet werden. Gemäß einer Ausführung können auch Furniere aus Weichholz und/oder Hartholz sortenrein oder - entsprechend den Anforderungen an das Holzprofil - kombiniert verwendet werden. Als Holzfurniere im Sinne der Erfindung werden auch Furniere aus Rattanholz und verholzten Bambusstangen verstanden.

Das Verfahren weist zumindest die folgenden Schritte auf, wobei die Reihenfolge der Schritte nicht zwingend wie angegeben durchlaufen werden muss. Die beschriebene Reihenfolge ist allerdings eine sinnvolle Ausführung der Erfindung, wobei insbesondere die Schritte iii) und iv) der Natur der Erfindung gemäß zumindest im Wesentlichen gleichzeitig erfolgen:
i) Anordnen, insbesondere Positionieren, der Furnierlagen aufeinander, insbesondere mit, insbesondere unmittelbar und/oder mittelbar, aneinander anliegenden Verbindungsseiten. Das Anordnen kann beispielsweise durch ein Abrollen der Furnierlagen von einer oder mehreren Furnierrollen erfolgen, sodass die Furnierrollen mit einander zugewandten Verbindungsseiten an einem Pressmittel angelangen, bevor sie durch dieses hindurch gefördert werden. Die jeweilige Furnierlage auf einer Furnierrolle kann insbesondere bezüglich einer Erstreckung in einer Arbeitsrichtung (insbesondere also in einer Abrollrichtung von der Furnierrolle) aus mehreren Teilfurnieren vorgefügt sein. Das Anordnen kann aber alternativ beispielsweise durch ein Aufeinanderlegen der Furnierlagen erfolgen, wobei dann - insbesondere bezüglich einer Arbeitsrichtung verhältnismäßig lange - gegebenenfalls aus mehreren Teilfurnieren vorgefügte Furnierlagen verwendet werden.
ii) Bereitstellen eines Klebstoffes an, insbesondere zwischen, den Furnierlagen, insbesondere an wenigstens einer, insbesondere beiden, jeweiligen Verbindungsseiten der Furnierlagen. Insbesondere kann das Bereitstellen durch ein Aufbringen des Klebstoffes in einer geeigneten Weise nach einem Abrollen von einer Furnierlage erfolgen, insbesondere aber auch, indem ein geeigneter Klebstoff - gegebenenfalls mit einer Deckschicht, die einen zu frühes verkleben vermeidet - bereits vor einem Aufrollen der Furnierlage auf eine Furnierrolle auf einer Verbindungsseite der Furnierlage aufgebracht wird. Bereitstellen kann auch heißen, dass der Klebstoff schon in einem Vlies integriert ist, das bereits auf die Furnierlage aufgezogen ist, insbesondere bevor diese bereitgestellt wird.
iii) Verkleben der Furnierlagen, indem die Verbindungsseiten mittels eines Pressmittels aneinandergepresst werden. Unter einem Verkleben ist vorliegend insbesondere zu verstehen, dass die aufeinander liegenden Furnierseiten so nahe und/oder fest aneinandergepresst werden, dass eine zerstörungsfrei unlösbare Verbindung zwischen den Verbindungsseiten zustande kommt, insbesondere mittels eines zumindest bereichsweise zwischen den Verbindungsseiten der Furnierlagen angeordneten Klebstoffs nach dessen Aushärtung.
iv) Fördern der Furnierlagen entlang einer Arbeitsrichtung des Pressmittels bei dem, insbesondere während des, Pressen(s). Bei, insbesondere während, der Förderung, insbesondere entlang der Arbeitsrichtung, werden die Furnierlagen an, insbesondere in und/oder durch, eine(r) Pressstrecke des Pressmittels um wenigstens eine Biegeachse gebogen.

Die Arbeitsrichtung bezeichnet insbesondere diejenige Richtung, in welcher die Furnierlagen durch das Pressmittel gefördert werden.

Eine bevorzugte Fördergeschwindigkeit entlang der Arbeitsachse kann beispielsweise zwei oder fünf oder zehn Meter pro Minute betragen. Das Pressmittel kann synonym auch als Querschnittbegrenzungsmittel bezeichnet werden, insbesondere weil das Pressen durch eine Förderung durch einen begrenzten Querschnitt des Pressmittels erfolgt. Das Fördern der Furnierlagen entlang der Arbeitsrichtung kann beispielsweise durch eine geeignete Ausgestaltung des Pressmittels selbst oder durch eine separate Fördereinrichtung erfolgen.

Die Schritte iii) und iv) finden insbesondere zumindest im Wesentlichen gleichzeitig und/oder insbesondere entlang der Pressstrecke statt. Denn das Pressen des Profils aus den einzelnen Furnierlagen ist - anders als bei stationär bestückten Pressen - nicht zeitlich entkoppelt vom Fördern der Furnierlagen. Zudem wird bei der Erfindung die Presskraft indirekt durch das Fördern entlang der Arbeitsrichtung durch das Pressmittel aufgebracht. Die geförderten Furnierlagen müssen gemeinsam durch einen Pressquerschnitt des Pressmittels passen und werden dabei entsprechend diesem Pressquerschnitt verpresst, während sie hindurch gefördert werden.

Gemäß einem weiteren Aspekt wird eine Vorrichtung zum Herstellen eines Holzprofils mit, insbesondere aus, zwei oder mehr Holz-Furnierlagen, bereitgestellt. Die Vorrichtung weist zumindest die folgenden Merkmale auf:
a) Ein Pressmittel zum Aneinanderpressen und damit Verkleben der Furnierlagen sowie zum Biegen der Furnierlagen um wenigstens eine Biegeachse.
b) Eine Fördereinrichtung (bei herkömmlichen Pultrusionsanlagen auch Abzugseinrichtung genannt) zum Fördern der Furnierlagen in der Vorrichtung, insbesondere wenigstens eine Förderrolle und/oder eine Doppelbandpresse und/oder wenigstens zwei unabhängig voneinander verfahrbare, alternierend zurückführbare, Greifer.

Das Pressmittel ist entweder zusätzlich als Fördereinrichtung ausgebildet, oder die Fördereinrichtung ist bezüglich einer Arbeitsrichtung der Vorrichtung nach dem Pressmittel angeordnet, und dazu eingerichtet, die Furnierlagen durch das Pressmittel zu fördern, insbesondere zu ziehen. Gemäß einer Ausführung können diese beiden Alternativen kombiniert werden, sodass das Pressmittel als Fördereinrichtung ausgebildet und eine zusätzliche Fördereinrichtung nach dem Pressmittel angeordnet ist, um die Furnierlagen zusätzlich durch das Pressmittel zu fördern.

Durch ein solches Verfahren bzw. eine solche Vorrichtung können Holzprofile mit mehreren Furnierlagen viel wirtschaftlicher hergestellt werden. Die Integration des Förderprozesses und des Pressprozesses vereinfacht zunächst die Handhabung in einem automatisierten Pressprozess massiv. Darüber hinaus ermöglicht diese Integration eine kontinuierliche Fertigung von Furnier-Holzprofilen. Wenn gemäß einer Ausführung eine Temperaturführung dieser Pultrusions-Fertigung von Holzprofilen geeignet eingestellt ist, ist es gemäß einer Ausführung beispielsweise möglich, auch die Kanten der pultrudierten Profile kontinuierlich zu bearbeiten, und/oder gemäß einer Ausführung deren Oberflächen kontinuierlich nachzubehandeln. Diese und analoge Arbeitsschritte sind bei bekannten - auch automatisierten - Pressverfahren nicht kontinuierlich möglich.

Mittels eines solchen Verfahrens bzw. einer solchen Vorrichtung können nicht nur deutlich wirtschaftlicher Holzprofile aus mindestens zwei Furnierlagen hergestellt werden. Es ist zudem auch möglich, nennenswert längere Holzprofile dieser Art herzustellen.

Durch die Biegung der Holzfurniere bei dem Verfahren kann dem Holzprofil die gewünschte Form gegeben werden. Beispielsweise kann dadurch ein L-Profil oder eines der anderen vorliegend erwähnten Profile gebogen werden. Somit können auch Holzprofile mit einer Biegung mit einem kontinuierlichen Verfahren hergestellt werden.

Eine Vorrichtung nach einer Ausführung der Erfindung weist gewisse Analogien zu Pultrusionsanlagen auf, wie sie beispielsweise zur Herstellung von Profilen aus faserverstärkten Kunststoffen verwendet werden. In dieser Analogiebetrachtung können beispielsweise die Furnierlagen den Fasermatten entsprechen, die bei herkömmlichen Pultrusionsanlagen Anwendung finden, während die Klebstofflagen der Kunststoffmatrix entsprechen können. Auch bei vielen herkömmlichen Pultrusionsanlagen wird das herzustellende Profil dadurch erhalten, dass eine Zugkraft auf das bereits ausgehärtete Pultrudat aufgebracht wird, wodurch die noch nicht verarbeiteten Fasermatten und ggf. auch Kunststoffmatten durch einen Verarbeitungsquerschnitt gefördert werden, der die Form des zu pultrudierenden Profils vorgibt.

Für die Ausführung der Erfindung ist es an sich irrelevant, ob die Furnierlagen durch das Pressmittel gefördert werden, oder das, insbesondere um die Furnierlagen angeordnete, Pressmittel entlang der Furnierlagen gefördert wird. Für das Verpressen an sich ist lediglich eine Relativbewegung der Furnierlagen und des Pressmittels nötig. Daher ist gemäß einer Ausführung vorgesehen, dass das Pressmittel und ggf. andere Bearbeitungswerkzeuge zur Bearbeitung der, ggf. verpressten, Furnierlagen entgegen dieser Arbeitsrichtung (anders betrachtet: die Arbeitsrichtung ist dann umgekehrt) gefördert werden, sodass (zumindest hinsichtlich einer Arbeitsachse) ortsfest verbleibende Furnierlagen durch die Förderung des Pressmittels verpresst werden. Insbesondere ist dann die Fördereinrichtung zum Fördern des Pressmittels und ggf. der weiteren Bearbeitungswerkzeuge eingerichtet. Insbesondere sind dann die Furnierlagen zumindest hinsichtlich der Arbeitsachse festgelegt, sprich gegen ein Verfahren in der Arbeitsrichtung gesichert.

Gemäß der Erfindung wird ein Holzprofil mit, insbesondere aus zwei oder mehr Holz-Furnierlagen, bereitgestellt. Das Holzprofil weist eine Längserstreckung und einen entlang der Längserstreckung zumindest im wesentlichen gleichbleibenden Profilquerschnitt auf, der wesentlich von einem Rechteck abweicht. Dass der Profilquerschnitt von einem Rechteck abweicht, bedeutet vorliegend insbesondere, dass es sich bei dem Holzprofil nicht um eine einfache Sperrholzplatte, sondern um ein wie auch immer gewinkeltes Profil handelt (beispielsweise die weiter oben erwähnten Querschnittsformen wie U-Form etc.).

Bei dem Holzprofil beträgt die Längserstreckung wenigstens 150 Zentimeter, insbesondere wenigstens 200 cm, wenigstens 250 cm oder wenigstens 300 cm. Holzprofile vom oben beschriebenen Typ konnten bisher in diesen Längen nicht gefertigt werden.

Zusätzlich oder alternativ weist das Holzprofil eine aus einer Profilkontur erhabene oder in diese eingebrachte, insbesondere eingeriefte, Schleifspur auf, die entlang zumindest im Wesentlichen der gesamten Längserstreckung an der gleichen Position an der Profilkontur des Profilquerschnitts angeordnet ist. Eine solche Schleifspur kann insbesondere aus kleinen, in bestimmten Konfigurationen unvermeidlichen, Abweichungen des Pressquerschnitt des Pressmittels resultieren und ist dann allen mit diesem Pressmittel hergestellten Holzprofilen gemein, zumindest bezüglich des Zeitraums, während dem die Abweichung des Pressquerschnitt vorliegt. Insbesondere tritt eine solche Schleifspur in einem stetigen Umfangsbereich des Profilquerschnitts auf, d. h. insbesondere nicht an einer Kante, sondern an einer Seite des Holzprofils.

Gemäß einer Ausführung ist vorgesehen, dass wenigstens zwei Furnierlagen mit unmittelbar aneinander anliegenden Verbindungsseiten aufeinander angeordnet werden, insbesondere sodass die aneinander anliegenden Verbindungsseiten einander berühren. Damit kann ein klassisches Furnierprofil hergestellt werden, bei dem insbesondere auf die einzelnen Furnierlagen vor dem Verpressen ein Klebstoff direkt auf die jeweiligen Verbindungsseiten aufgebracht wurde, wobei ein Klebstoff zumindest auf eine Verbindungsseite pro Verbindung zweier Furnierlagen aufgebracht wurde.

Gemäß einer zusätzlichen oder alternativen Ausführung ist vorgesehen, dass wenigstens zwei Furnierlagen mit mittelbar aneinander anliegenden Verbindungsseiten aufeinander angeordnet werden, insbesondere sodass zwischen den Verbindungsseiten eine Zusatzlage, insbesondere eine Verstärkungslage (beispielsweise FVK oder Metall) und/oder eine Trägerlage (beispielsweise Vlies oder Folie) und/oder eine Leiterlage (beispielsweise Metallbahnen) angeordnet wird/ist.

Mit einer Verstärkungslage kann das Holzprofil beispielsweise eine verbesserte Festigkeit hinsichtlich Zug, Druck, Biegung und/oder Torsion aufweisen, die insbesondere an den vorgesehenen Anwendungsfall angepasst sein kann.

Mit einer Trägerlage kann beispielsweise eine zum Verkleben der Furnierlagen benötigte Klebeschicht bereitgestellt werden.

Mit einer Leiterlage kann beispielsweise eine in dem Holzprofil verlaufende Leiterbahnen realisiert werden, die einer Energieübertragung und/oder einer Datenübertragung dienen kann.

Die Furnierlagen werden entlang der Arbeitsrichtung des Pressmittels durch wenigstens einen Pressabstand und/oder wenigstens einen Pressquerschnitt des Pressmittels gefördert, der sich entlang wenigstens eines Teils einer Pressstrecke erstreckt. In dem die Furnierlagen gemeinsam durch einen Pressabstand oder einen Pressquerschnitt gefördert (also gezwungen) werden, können die einzelnen Furnierlagen miteinander verklebt werden.

Mit dem Begriff Pressabstand ist vorliegend insbesondere gemeint, dass das Pressmittel bezüglich der Durchförderung der aufeinander angeordneten Furnierlagen in Arbeitsrichtung eine Ausnehmung aufweist, die an einer Position bezüglich der Arbeitsrichtung einen minimalen Abstand (i.e. den Pressabstand) aufweist, insbesondere bezüglich einer Senkrechten zu einer Förderebene der Furnierlagen. Unter einem Pressquerschnitt ist vorliegend insbesondere eine in Arbeitsrichtung verlaufende Ausnehmung aus dem montierten Pressmittel zu verstehen, die beispielsweise entlang der Arbeitsrichtung konstant oder sich verändernd ausgebildet sein kann.

Gemäß einer Ausführung ist vorgesehen, dass bei, insbesondere während, der Förderung durch die Pressstrecke die Furnierlagen, insbesondere gemeinsam, um wenigstens eine Biegeachse gebogen werden. Dadurch kann dem Holzprofil die gewünschte Form gegeben werden. Dies erfolgt insbesondere durch mehrere unterschiedliche Pressquerschnitte, die in Arbeitsrichtung nacheinander angeordnet sind und/oder durch einen Pressquerschnitt, der entlang der Arbeitsrichtung seine Kontur ändert (nicht zeitlich, sondern örtlich). Beispielsweise kann dadurch ein L-Profil oder eines der anderen oben erwähnten Profile gebogen werden. Somit können auch Holzprofile mit einer Biegung mit einem kontinuierlichen Verfahren hergestellt werden.

Um in jedem Anwendungsfall eine optimale Gestaltung (insbesondere Aushärtung) der Klebeverbindung zu unterstützen, ist gemäß einer Ausführung vorgesehen, dass die Furnierlagen entlang der Pressstrecke in geeigneter Ausprägung geheizt und/oder, ggf. anschließend an ein Heizen, gekühlt werden. Wie das Temperaturprofil entlang der Arbeitsrichtung im einzelnen Anwendungsfall eingestellt wird, ist von vielen Faktoren - unter anderem vom verwendeten Klebstoff, von einer Dicke der Furnierlagen und von einer Fördergeschwindigkeit - abhängig, aber an sich durch den Fachmann problemlos per Simulation und/oder Versuche ermittelbar.

Gemäß einer Ausführung ist vorgesehen, dass jede der Furnierlagen aus einem Furnierspeicher, insbesondere von einer Furnierrolle, kontinuierlich, insbesondere entsprechend der Förderung durch das Pressmittel, zugeführt wird. Dies ermöglicht eine wirtschaftliche Beschickung des kontinuierlich durchgeführten Verpressens. Die einzelnen Furnierlagen können beispielsweise von Furnierrollen bereitgestellt werden, auf denen in Aufroll-Richtung aneinandergefügte Furnierlagenteile mit einer Gesamtlänge von vielen, beispielsweise 20 oder 50 Metern, bereitgestellt werden.

Gemäß einer Ausführung ist vorgesehen, dass jede Furnierlage von einer eigenen Furnierrolle zugeführt wird.

Wenn der Anwendungsfall Furnierlagen mit unterschiedlicher Faserausrichtung erfordert, können die unterschiedlich ausgerichteten Furnierlagen gemäß einer Ausführung bereits in den entsprechenden Faserausrichtungen auf den jeweiligen Rollen bereitgestellt werden.

Gemäß einer Ausführung ist vorgesehen, dass eine Faserorientierung benachbarter Furnierrollen aufeinander abgestimmt wird, insbesondere einander entsprechend oder mit einem vorbestimmten Winkelversatz, wie beispielsweise rechtwinkelig zueinander, eingerichtet wird. So kann ein sehr zugfestes Holzprofil hergestellt werden.

Um Oberflächendefekte an den Furnierlagen zu vermeiden und/oder auf einfache Weise eine benötigte Klebstoffschicht bereitzustellen, ist gemäß einer Ausführung vorgesehen, dass die Furnierlagen mit einer Trägerlage, insbesondere einem Trägervlies zugeführt werden, das mit verpresst oder vor dem Pressen von der Furnierlage abgetrennt wird.

Um eine einfache Herstellung der Holzprofile zu unterstützen, ist gemäß einer Ausführung vorgesehen, dass die Furnierlagen mit einer Klebelage an jeder vorgesehenen Verbindungsseite zugeführt werden, wobei insbesondere die Klebelage derart ausgebildet ist, dass der Klebstoff durch bestimmte Umgebungsbedingungen, insbesondere eine Temperatur und/oder einen Druck, ggf. in Kombination mit einer Zeitdauer, während der die Klebelage den Umgebungsbedingungen ausgesetzt ist, aktivierbar ist.

Gemäß einer Ausführung ist vorgesehen, dass die Klebelage zusätzlich als Trägerlage ausgebildet ist, um den Aufwand bei der Beschickung des Verfahrens zu minimieren.

Gemäß einer Ausführung ist vorgesehen, dass die Furnierlagen beim Zuführen zu dem Pressmittel mit Klebstoff und/oder einem aushärtbaren Harz beschichtet werden, insbesondere mittels eines Bades und/oder einer Sprühanlage und/oder einer Auftragsrolle. Der Fachmann kann für den einzelnen Anwendungsfall den geeigneten Klebstoff (oder das geeignete Harz in der Verwendung als Klebstoff) und die dafür in Kombination mit den verarbeiteten Furnierlagen geeignete Beschichtungsmethode auswählen.

Gemäß einer Ausführung werden die Furnierlagen mittels des Pressmittels selbst in Arbeitsrichtung gefördert. Das Pressmittel weist dazu in einer solchen Ausführung insbesondere Förderrollen und/oder eine Doppelbandpresse und/oder wenigstens zwei unabhängig voneinander verfahrbare, alternierend zurückgeführte, Greifer auf. Welche Druckkräfte auf die oberste Furnierlage und die unterste Furnierlage - und damit welche Zugkräfte in Arbeitsrichtung - durch das Pressmittel aufgebracht werden müssen, kann der Fachmann im einzelnen Anwendungsfall durch verfügbare Simulationswerkzeuge und/oder einfache Versuche ermitteln. Durch die Ausbildung des Pressmittels selbst als Fördereinrichtung kann eine Vorrichtung zur Durchführung des Verfahrens sehr einfach ausgebildet sein.

Gemäß einer alternativen Ausführung wird ein aus dem Pressquerschnitt am Ende der Pressstrecke aus dem Pressmittel herausragendes Roh-Holzprofil mittels einer Fördereinrichtung in Arbeitsrichtung gefördert wird, insbesondere mittels Förderrollen und/oder einer Doppelbandpresse und/oder wenigstens zweier unabhängig voneinander verfahrbarer, alternierend zurückgeführter, Greifer. Dadurch kann zum Fördern der Furnierlagen durch das Pressmittel eine für die vorgesehenen Anwendungen verfügbare Standard-Fördereinrichtung wie zum Beispiel eine handelsübliche Doppelbandpresse verwendet werden.

Zur Vereinfachung eines einleitenden Beschickens einer Vorrichtung bzw. eines Verfahrens nach einer Ausführung der Erfindung werden gemäß einer Ausführung folgende Verfahrensschritte durchgeführt: 0.i) Verfahren eines zweiten, insbesondere oberen, Presswerkzeugs des Pressmittels in eine Richtung weg von einem ersten, insbesondere unteren, Presswerkzeug des Pressmittels; 0.ii) ggf. manuelles, Zuführen der Furnierlagen; 0.iii) Schließen des Pressmittels, insbesondere durch Verfahren des zweiten Presswerkzeugs in eine Richtung hin zu dem ersten Presswerkzeug, insbesondere bis ein Pressabstand und/oder ein Pressquerschnitt erreicht ist; 0.iv) zunächst Pressen ohne Fördern der Furnierlagen in Arbeitsrichtung; 0.v) nach Ablauf einer vorbestimmten, vom Anwendungsfall abhängigen, Presszeit Fördern (insbesondere Beginn des Förderns) der Furnierlagen in Arbeitsrichtung.

Gemäß einer Ausführung ist vorgesehen, dass während einer einleitenden Beschickung des Pressmittels die Furnierlagen mittels eines Zugmittels, insbesondere mittels eines Seilzugs, dessen Seil an einer Kopfseite wenigstens einer der Furnierlagen befestigt ist, durch das Pressmittel gezogen werden, je nach Anwendungsfall manuell oder motorisch unterstützt.

Gemäß einer Ausführung ist vorgesehen, dass ein Roh-Holzprofil (bezüglich der Arbeitsrichtung nach dem Pressmittel) an wenigstens einer Seitenkante des Profils mit einer vorbestimmten Kantenkontur beschnitten wird, insbesondere an beiden Seitenkanten, insbesondere auf eine vorbestimmte Breite des Profils.

Gemäß einer Ausführung ist vorgesehen, dass die Kantenkontur gestuft und/oder gezinkt und/oder auf Stoß gearbeitet ist.

Gemäß einer Ausführung ist vorgesehen, dass ein Roh-Holzprofil (bezüglich der Arbeitsrichtung nach dem Pressmittel) in einer Ebene, die senkrecht zur Arbeitsrichtung steht, abgelängt wird, insbesondere während der Förderung des Roh-Holzprofils entlang der Arbeitsrichtung. Insbesondere verfährt dazu ein Ablängmittel synchron mit der Förderung des Profils.

Gemäß einer Ausführung ist vorgesehen, dass das Pressmittel wenigstens einen, insbesondere mehrere, Pressabstände und/oder wenigstens einen, insbesondere mehrere, Pressquerschnitte aufweist, die sich entlang wenigstens eines Teils einer Pressstrecke erstrecken und durch welche hindurch die Furnierlagen förderbar sind. Durch mehrere Presseabstände und/oder Pressquerschnitte kann entlang der Arbeitsrichtung das Holzprofil sukzessive in eine gewünschte Presskontur gebogen werden.

Um das Pressmittel einfach zu gestalten, ist der Pressquerschnitt so ausgebildet, dass er sich hinsichtlich der Arbeitsrichtung entlang der Pressstrecke verändert. Gemäß einer Ausführung erfolgt das Biegen der Furnierlagen um die wenigstens eine Biegeachse aufgrund einer Veränderung des Pressquerschnitts entlang der Pressstrecke. Darunter ist insbesondere auch eine Verwendung von wenigstens zwei oder mehr unterschiedlichen Pressquerschnitten, die in der Arbeitsrichtung beabstandet voneinander entlang der Pressstrecke angeordnet sind, zu verstehen. Dadurch kann in einem Arbeitsschritt sowohl hinsichtlich gewünschter Wandstärken (Pressen) als auch hinsichtlich gewünschter Kontur (Biegen) zumindest im Wesentlichen die angestrebte Form des Holzprofils erreicht werden.

Für eine geeignete Prozessführung des Verklebens ist gemäß einer Ausführung vorgesehen, dass sich der Pressabstand entlang der Pressstrecke verändert.

Insbesondere ist der Pressquerschnitt, in Arbeitsrichtung zu Beginn der Pressstrecke, rechteckig und weist insbesondere eine Breite auf, die ein Vielfaches größer ist als die Höhe des Querschnitts. Zum Ende der Pressstrecke hin weist der Pressquerschnitt zumindest in wenigstens einem Abschnitt des Querschnitts eine Krümmung auf, insbesondere ist er zumindest im Wesentlichen U-förmig, J-förmig, V-förmig, rechtwinkelig, Z-förmig, halbkreisförmig und/oder halbellipsenförmig, und/oder weist einen größeren oder kleineren Anteil eines Kreises und/oder einer Ellipse auf. So können Holzprofile mit den genannten Formen kontinuierlich hergestellt werden.

Um mit einem Verfahren bzw. einer Vorrichtung nach einer Ausführung der Erfindung rohrförmige Holzprofile herstellen zu können, ist gemäß einer Ausführung vorgesehen, dass der Pressquerschnitt, zumindest (in Arbeitsrichtung) zum Ende der Pressstrecke hin, ein volles Ellipsoid, insbesondere einen vollen Kreis oder eine volle Ellipse, ausbildet. Dazu verformt sich gemäß einer Ausführung eines der Werkzeuge des Pressmittels entlang Pressstrecke von einer flachen Anlagefläche für die Furnierlagen hin zu einer zumindest im Wesentlichen umlaufenden Ausnehmung. Ein anderes Werkzeug des Pressmittels verformt sich gemäß einer Ausführung entlang der Pressstrecke von einer flachen Anlagenfläche für die Furnierlagen hin zu einem Dorn, welcher einen Kern des im Entstehen begriffenen Roh-Rohres ausbildet.

Gemäß einer Ausführung ist entlang der Pressstrecke eine Heizung zum Heizen der Furnierlagen und/oder eine Kühlung zur Kühlung der Furnierlagen angeordnet. Insbesondere kann nicht nur die Pressstrecke geheizt und/oder gekühlt werden, sondern eine gesamte Arbeitsstrecke, die auch einen Vorlauf und einen Nachlauf der Pressstrecke beinhaltet.

Gemäß einer Ausführung ist vorgesehen, dass das Pressmittel ein erstes, insbesondere unteres, Presswerkzeug aufweist, und ein zweites, insbesondere oberes, Presswerkzeug aufweist. Diese Aufteilung erleichtert das Beschicken der Vorrichtung mit Furnierlagen. Insbesondere ist das zweite Presswerkzeug von dem ersten Presswerkzeug weg und zu diesem hin verfahrbar, insbesondere hinsichtlich des Abstandes zwischen den beiden Presswerkzeugen einstellbar. Dabei ist insbesondere vorgesehen, dass die beiden Presswerkzeuge gemeinsam entlang der Pressstrecke den Pressquerschnitt ausbilden.

Um mit der Vorrichtung möglichst unterschiedliche Profilquerschnitte der Holzprofile herstellen zu können, ist gemäß einer Ausführung vorgesehen, dass das Pressmittel eine Mehrzahl von hinsichtlich der Arbeitsrichtung beabstandeten Paaren jeweils eines ersten und eines zweiten Presswerkzeugs aufweist, die insbesondere unterschiedliche Pressquerschnitte aufweisen können.

Gemäß einer Ausführung ist vorgesehen, dass das Pressmittel wenigstens eine doppelseitige Bandpresse aufweist. Insbesondere weist das Pressmittel eine Mehrzahl von hinsichtlich der Arbeitsrichtung beabstandeten doppelseitigen Bandpressen auf, die insbesondere unterschiedliche Pressquerschnitte aufweisen können.

Gemäß einer Ausführung ist vorgesehen, dass die Vorrichtung einen Furnierspeicher aufweist, der dazu eingerichtet ist, an dem Pressmittel kontinuierlich, insbesondere entsprechend der Förderung durch das Pressmittel, die wenigstens zwei Furnierlagen bereitzustellen. Insbesondere ist der Furnierspeicher auch dazu eingerichtet, mehr als zwei Furnierlagen bereitzustellen.

Für eine einfache Beschickung des Verfahrens mit Furnierlagen ist gemäß einer Ausführung vorgesehen, dass der Furnierspeicher für jede Furnierlage eine eigene Furnierrolle aufweist, von welcher die Furnierlage, insbesondere bedarfsgemäß (also entsprechend der Förderung der Furnierrolle in Arbeitsrichtung während des Verfahrens), abrollbar ist.

Gemäß einer Ausführung ist vorgesehen, dass der Furnierspeicher dazu eingerichtet ist, Furnierlagen voneinander zumindest im Wesentlichen entsprechender Breite, insbesondere Rollenbreite, bereitzustellen. Damit kann ein Holzprofil hergestellt werden, das bereits ohne eine Nachbearbeitung definierte Seitenränder aufweist.

Zur Herstellung von Holzprofilen mit einer hohen Festigkeit ist gemäß einer Ausführung eine Faserorientierung benachbarter Furnierrollen aufeinander abgestimmt. Insbesondere ist die Faserorientierung der benachbarten Furnierrollen einander entsprechend oder mit einem vorbestimmten Winkelversatz, wie beispielsweise rechtwinkelig zueinander, ausgebildet.

Ein Winkelversatz ist nicht für alle denkbaren Holzprofile erforderlich und kann beispielsweise entfallen, wenn Zusatzlagen aus anderen Materialien die entsprechenden Belastungen aufnehmen können.

Gemäß einer Ausführung weist der Furnierspeicher wenigstens eine Klebstoffrolle zur Bereitstellung einer Klebelage an einer vorgesehenen Verbindungsseite von zwei Furnierlagen auf. Die Klebstoffrolle kann integriert mit einer Furnierrolle oder separat ausgebildet sein. Auf jeden Fall ist damit eine einfache Bereitstellung von Klebstoff zwischen den Furnierlagen möglich.

Als Klebstoff für die Klebeschicht, insbesondere auch für eine als Klebelage ausgebildete Klebeschicht, kommen im Ermessen des Fachmanns verschiedene Klebstoffe infrage.

Wünschenswert ist eine kurze Aushärtungszeit. Das ist z.B. bei vielen Epoxidharzen unrealistisch; trotzdem können aber vorliegend bestimmte Epoxidharze als Klebstoff eingesetzt werden, wenn sie geeignete Aushärt-Eigenschaften aufweisen.

Ein thermoplastischer Klebstoff kann Anwendung finden, weil sich durch Aufheizen (beispielsweise über Raumtemperatur) der Klebstoff verflüssigt (der bei Raumtemperatur noch fest war), die zu verbindenden Lagen einen Kontakt einhergehen und beim Abkühlen miteinander verkleben.

Auch bei duroplastischen Klebstoffen sind Klebstoffe mit kurzer Aushärtungszeit einsetzbar. Da die Aushärtungszeit sich durch hohe Temperaturen verkürzt, ist dabei eine verhältnismäßig hohe Temperatur im Werkzeug und damit eine starke Heizung notwendig.

Beispielsweise kann zum Verkleben der Furnierlagen ein Standard-Klebstoff der Formholzherstellung wie ein Harnstoff-Formaldehyd-Klebstoff verwendet werden. Dispersionsklebstoffe können ebenso verwendet werden.

Um die Holzprofile nachwachsenden Bestandteilen herzustellen, kann gemäß einer Ausführung ein Klebstoff auf Zuckerbasis verwendet werden, der ebenfalls kurze Aushärtungszeiten aufweist. Gleiches gilt für Klebstoffe auf Stärkebasis.

Gemäß einer Ausführung können dem Klebstoff Additive hinzugefügt werden, wie z.B. Brandhemmstoffe. So können die hergestellten Holzprofile brandhemmend wirken, obwohl sie zu einem großen Anteil aus Holz bestehen.

Gemäß einer Ausführung weist die Vorrichtung eine Beschichtungseinrichtung auf, welche dazu eingerichtet ist, die Furnierlagen beim Zuführen zu dem Pressmittel mit Klebstoff und/oder einem aushärtbaren Harz zu beschichten, insbesondere mittels eines Bades oder einer Sprühanlage oder einer Auftragsrolle.

Ggf. kann beim Fügen der zwei Hälften ein geeignetes Harz zum Einsatz kommen, da die Fügestelle potentiell eine Festigkeits-Schwachstelle darstellt und Harz dem entgegenwirkt. Das Harz kann gegebenenfalls so ausgebildet werden, dass es zudem zur Versiegelung das Holzprofils bei hohen Umweltanforderungen genommen werden.

Die Holzprofile können mit einer oder mehreren Arten Furnier hergestellt werden. Gemäß unterschiedlichen Ausführungen können dabei Furniere aus Laubhölzern und/oder Nadelhölzern sortenrein oder - entsprechend der Anforderungen an das Holzprofil - kombiniert verwendet werden. Gemäß einer Ausführung können auch Furniere aus Weichholz und/oder Hartholz sortenrein oder - entsprechend der Anforderungen an das Holzprofil - kombiniert verwendet werden. Auch Furniere aus Rattanholz und/oder verholzten Bambusstangen können zur Herstellung der Holzprofile sortenrein oder beliebig - gegebenenfalls auch mit Laub- und/oder Nadelhölzern - kombiniert verwendet werden.

Zur Herstellung der Holzprofile können die Hölzer insbesondere auch untereinander gemischt werden, insbesondere indem eine oder mehrere Furnierlagen aus einem Holz mit einer oder mehreren Furnierlagen aus einem anderen Holz und gegebenenfalls einer oder mehreren weiteren Furnierlagen aus einem dritten Holz und ggf. weiteren Hölzern kombiniert werden.

Beispiel 1: Um ein hochwertig anmutendes Holzprofil zu erhalten, kann zum Beispiel außen ein Edelfurnier (z.B. Walnuss) verwendet werden, während in der Mitte Buche zum Einsatz kommt. Insbesondere sind dabei die beiden äußeren Furnierlagen ein Edelholzfurnier, während die dazwischen liegende(n) Furnierlagen ein hochwertiges Standard-Furnier aufweisen. Wenn das hergestellte Holzprofil deutlich eine Außenseite und eine Innenseite aufweist, kann es für die hochwertige Anmutung auch ausreichen, lediglich die außenliegende Furnierlage aus dem Edelholz auszuführen.

Beispiel 2: Für die außen liegenden Furnierlagen kommt ein Standardfurnier (z.B. Buche) zum Einsatz, während dazwischen ein Vlies eingelegt wird. Beispielsweise für Kofferraumklappen werden Vliese verarbeitet, welche einen Klebstoff schon integriert haben und welche ausgehend von einer Dicke von ca. 2 cm unter Hitze auf 3 mm verpresst werden und dann stabil sind. Ein solches Vlies kann für eine derartige Ausführung des Holzprofils verwendet werden.

Beispiel 3: Für die außen liegenden Furnierlagen wird ein Edelholzfurnier verwendet und in der Mitte kommt ein leichtes Balsaholzfurnier zum Einsatz. Durch eine im Verhältnis zu den Außenlagen dickere Wandstärke können Beul- und Knickeffekte minimiert werden, wenn das im Anwendungsfall erforderlich ist. Für hohe Ansprüche an Festigkeit und Steifigkeit kann anstatt Balsaholz zusätzlich ein Naturfasertextil (Flachs/Hanf) oder ein synthetisches Textil (Glas/Kohle/Aramidfasern, Gewebe/Gelege) eingearbeitet werden. Für Abschirmungszwecke oder Signal- und/oder Stromleitung kann auch vorgesehen sein, Metallbleche/-folien mit einzuarbeiten.

Gemäß einer Ausführung ist eine erste Spaneinrichtung vorgesehen, die dazu eingerichtet ist, eine Kantenkontur des verklebten Roh-Holzprofils zu schneiden. Gemäß einer Ausführung ist eine zweite Spaneinrichtung vorgesehen, die dazu eingerichtet ist, das Roh-Holzprofil abzulängen. Gemäß einer Ausführung ist vorgesehen, dass die erste und die zweite Spaneinrichtung gemeinsam in einer Zuschnitteinrichtung ausgebildet sind.

Gemäß einer Ausführung ist eine Bearbeitungseinrichtung vorgesehen, die dazu eingerichtet ist, eine oder mehrere Oberflächen des verpressten Roh-Holzprofils abzuschleifen und/oder zu lackieren, insbesondere noch an dem entlang der Arbeitsrichtung geförderten Strang, d.h. vor einem Ablängen. Alternativ kann die Bearbeitungseinrichtung dies auch nach dem Ablängen erledigen. Gemäß einer Ausführung ist die Bearbeitungseinrichtung zusätzlich oder alternativ dazu eingerichtet, Bohrungen, Nieten und/oder Gewinde in das Roh-Holzprofil einzubringen.

Gemäß einer Ausführung weisen zwei Furnierlagen des Holzprofils, die eine einander entsprechende Faserausrichtung aufweisen, an unterschiedlichen Positionen der Längserstreckung des Holzprofils jeweils eine Fügestelle benachbarter Furnierteile auf.

Weitere Vorteile und Anwendungsmöglichkeiten der Erfindung ergeben sich aus der nachfolgenden Beschreibung im Zusammenhang mit den Figuren.
- Fig. 1: zeigt eine Vorrichtung zum Herstellen eines Holzprofils nach einer beispielhaften Ausführung der Erfindung mittels eines Verfahrens nach einer beispielhaften Ausführung der Erfindung.
- Fig. 2: zeigt das Pressmittel der Vorrichtung aus Fig. 1 mit dem durchgeförderten Roh-Holzprofil in einer Schnittdarstellung entlang der in Fig. 1 eingezeichneten Schnittlinie A - A.
- Fig. 3: zeigt das Pressmittel der Vorrichtung aus Fig. 1 mit dem durchgeförderten Roh-Holzprofil in einer Schnittdarstellung entlang der in Fig. 1 eingezeichneten Schnittlinie B - B.
- Fig. 4: zeigt das Pressmittel der Vorrichtung aus Fig. 1 mit dem durchgeförderten Roh-Holzprofil in einer Schnittdarstellung entlang der in Fig. 1 eingezeichneten Schnittlinie C - C.
- Fig. 5: zeigt das durchgeförderte Roh-Holzprofil in der Vorrichtung aus Fig. 1 in einer Schnittdarstellung entlang der in Fig. 1 eingezeichneten Schnittlinie D - D.
- Fig. 6: zeigt einen Ausschnitt des Roh-Holzprofils aus Fig. 5 in einer Schnittdarstellung entlang der in Fig. 5 eingezeichneten Schnittlinie E - E.
- Fig. 7: zeigt das abgelängte, gemäß Fig. 1-5 hergestellte Holzprofil nach einer beispielhaften Ausführung der Erfindung in einer Schrägansicht.

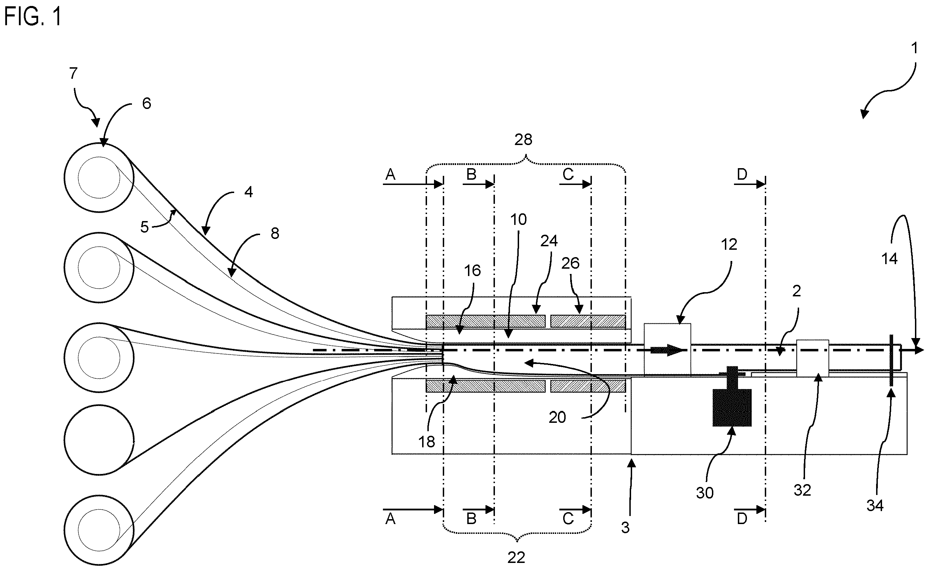

In Fig. 1 ist eine Vorrichtung 1 zum Herstellen eines Holzprofils 2 mit mehreren Furnierlagen 4 gemäß einer beispielhaften Ausführung der Erfindung dargestellt. Auf der Vorrichtung 1 kann ein Verfahren zum Herstellen eines Holzprofils 2 mit mehreren Furnierlagen 4 gemäß einer beispielhaften Ausführung der Erfindung durchgeführt werden. Wenn auf der Vorrichtung 1 ein solches Verfahren durchgeführt wird, kann damit ein Holzprofil 2 nach einer beispielhaften Ausführung der Erfindung hergestellt werden.

Die Furnierlagen 4 werden in der Vorrichtung 1 aus Furnierrollen 6 eines Furnierspeichers 7 bereitgestellt. Von mehreren oder jeder bis auf eine Furnierrolle 6 wird auch eine Klebstofflage 8 abgerollt, wobei jeweils wenigstens eine Klebstofflage 8 zwischen zwei Furnierrollen bereitgestellt wird. So kann sichergestellt werden, dass zwischen zwei einander zugewandten Verbindungsseiten 5 benachbarter Furnierlagen 4 jeweils eine Klebstofflage 8 angeordnet ist.

Die Vorrichtung 1 weist insbesondere ein Fundament 3 auf, an welchem ein Pressmittel 10, eine Heizung 24, eine Kühlung 26, eine Fördereinrichtung 12, eine erste Spaneinrichtung 30, eine zweite Spaneinrichtung 34 sowie eine Bearbeitungseinrichtung 32 angeordnet sind.

Die Vorrichtung 1 weist ein Pressmittel 10 zum Aneinanderpressen und damit Verkleben der Furnierlagen 4 auf. Zudem weist die Vorrichtung 1 eine Fördereinrichtung 12 zum Fördern der Furnierlagen 4 in der Vorrichtung 1 auf.

Im Ausführungsbeispiel ist die Fördereinrichtung 12 bezüglich einer Arbeitsrichtung (Bzzn. 14 bezeichnet eine in Arbeitsrichtung verlaufende Achse; auch der dicke Pfeil zur Veranschaulichung einer Bewegung des Roh-Holzprofils 2' durch die Fördereinrichtung 12 ist in Arbeitsrichtung ausgerichtet) der Vorrichtung 1 nach dem Pressmittel 10 angeordnet ist, und dazu eingerichtet, die Furnierlagen 4 durch das Pressmittel 10 zu fördern, insbesondere zu ziehen.

Die Fördereinrichtung 12 ist im Ausführungsbeispiel als Doppelbandpresse ausgebildet, in welche bei einer einleitenden Beschickung ein bereits verpresstes Pultrudat aus den Furnierlagen 4 eingeführt und anschließend bei der Durchführung des Verfahrens in Arbeitsrichtung 14 gezogen wird.

Das Pressmittel 10 weist ein zweites Presswerkzeug (Oberwerkzeug) 16 und ein erstes Presswerkzeug (Unterwerkzeug) 18 auf. Das zweite Presswerkzeug 16 ist dabei höhenverstellbar angeordnet, um die einleitende Beschickung mit den Furnierlagen 4 einfacher vornehmen zu können.

Die Presswerkzeuge 16 und 18 bilden in einem geschlossenen Zustand einen Pressquerschnitt 20 aus, der so ausgebildet ist, dass er entlang einer Pressstrecke 22 auf die Furnierlagen 4 einwirkt, wobei der Pressquerschnitt an der ersten Position A - A die flach übereinander angeordneten Furnierlagen 4 aufnimmt und bis zu der letzten Position C - C des Pressquerschnitts in ein U-förmiges Roh-Holzprofil 2' biegt und damit umformt und dabei verpresst.

Beide Presswerkzeuge 18 und 16 weisen jeweils an ihrem Eingang (für die Furnierlagen 4; bezüglich der Arbeitsrichtung 14) eine zulaufende Geometrie hin zu der ersten Position eines Pressquerschnitts 20 auf, sodass ein erstes Beschicken der Vorrichtung 1 mit den Furnierlagen 4 erleichtert wird.

Zum Herstellen des Holzprofils 2 werden die einzelnen Furnierlagen 4 mit den Klebstofflagen 8 abgerollt, weil die Fördereinrichtung 12 an dem bereits gepressten Teil des Roh-Holzprofils 2' zieht.

Durch die aufgebrachte Zugkraft in Arbeitsrichtung 14 werden die Furnierlagen 4 und die dazwischen angeordneten Klebelagen 6 durch den Pressquerschnitt 20 des Pressmittels 10 gezogen und dabei am Pressquerschnitt 20 verpresst und damit verklebt.

Je nach verwendeten Furnieren und Klebstoffen kann entlang geeigneter Abschnitte einer Pressstrecke 22 oder auch davor und/oder danach (bzgl. der Arbeitsrichtung 14) eine Heizung 24 zum Heizen der Lagen 6 bzw. später des Pultrudats und/oder eine Kühlung 26 zum Kühlen des Pultrudats erfolgen. Im Ausführungsbeispiel ist entlang einer Arbeitsstrecke 28 zunächst eine Heizung 24 angeordnet, um die Furnierlagen 4 und die Klebelagen 6 geeignet zu temperieren, um optimal verklebt und umgeformt zu werden. In Arbeitsrichtung 14 daran angeschlossen ist im weiteren Verlauf der Arbeitsstrecke 28 eine Kühlung 26 angeordnet, um das dann bereits weitgehend und später ganz umgeformte Roh-Holzprofil 2' ausreichend zu kühlen, um die neue Form durch ein Aushärten beständig zu machen.

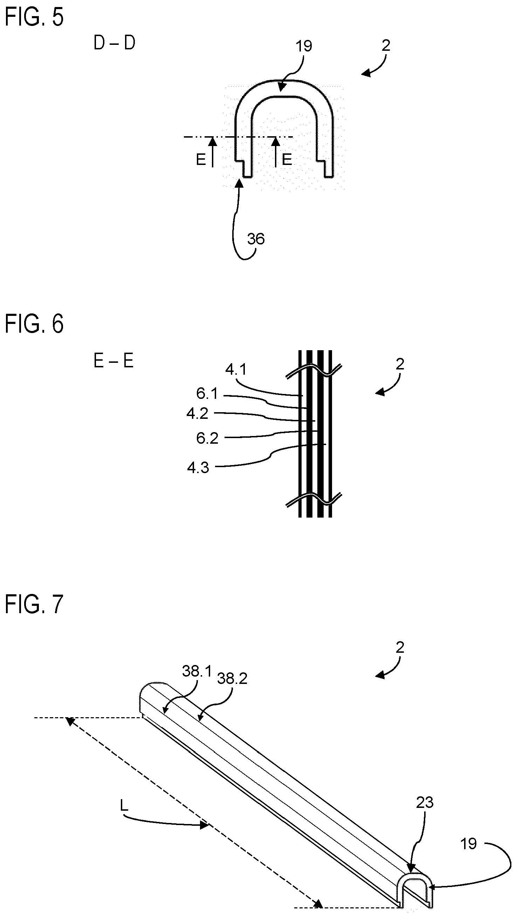

Mittels der ersten Spaneinrichtung 30 werden anschließend definierte Fügekanten in das ausgehärtete Roh-Holzprofil 2' eingebracht (vergleiche auch Fig. 5 zu den Fügekanten). Die erste Spaneinrichtung 30 ist im Ausführungsbeispiel mit Fräsköpfen ausgebildet, die entsprechend der gewünschten Geometrie des Holzprofils 2 positioniert werden können.

Die Bearbeitungseinrichtung 32 schleift im Ausführungsbeispiel insbesondere eine äußere Seitenfläche des Roh-Holzprofils 2' ab und bringt falls für den vorgesehenen Verwendungszweck benötigt eine Versiegelungslack auf.

Mittels der zweiten Spaneinrichtung 34 werden Stücke einer vorbestimmten Länge von dem Pultrudat abgelängt. Die zweite Spaneinrichtung 34 weist insbesondere ein Sägeblatt auf, welches beim Ablängen entsprechend der Fördergeschwindigkeit der Fördereinrichtung 12 mit dem pultrudierten Roh-Holzprofil 2' verfahren wird.

Jeweils zwei abgelängte Holzprofile 2 gleicher Länge können anschließend in einem weiteren Verfahrensschritt (der in Fig. 1 nicht dargestellt ist) an ihren Fügekanten verklebt werden, und bilden so ein Holzprofilrohr aus. Natürlich können die Holzprofile 2 auch einzelnen weiterverwendet werden.

Selbstverständlich können mit dem beschriebenen Verfahren nicht nur U-Profile, sondern alle im vorliegenden Dokument erwähnten Profilformen und auch andere Profilformen realisiert werden. Die realisierte Profilformen hängt letzten Endes von der Ausgestaltung des Pressquerschnitt 20 am Pressmittel 10 ab. Die Fördereinrichtung 12, die Spaneinrichtungen 30 und 34 sowie die Bearbeitungseinrichtung 32 können einfach an die Ausgangsform des Pressmittels 10 angepasst werden.

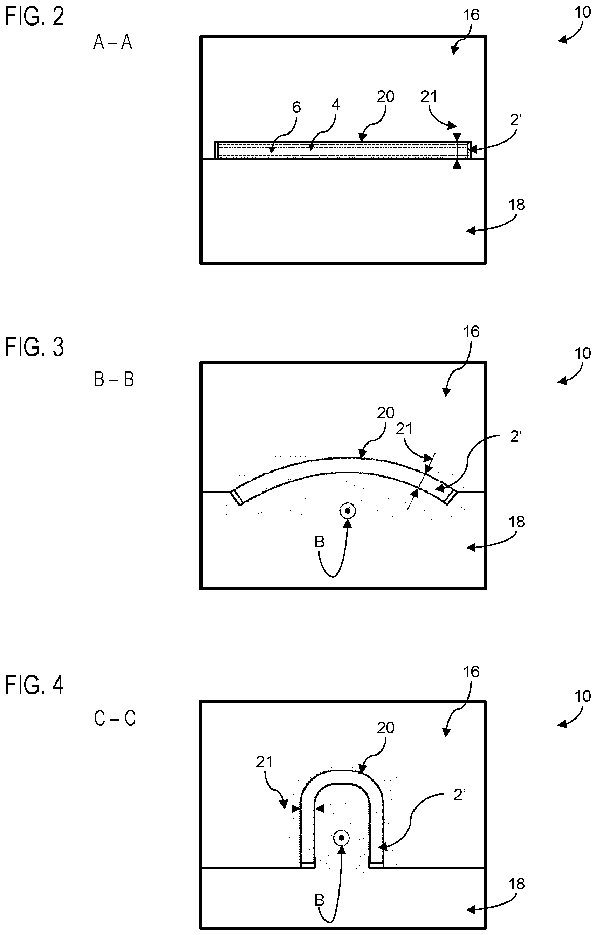

In den nachfolgend erläuterten Figuren 2 bis 5 ist zum besseren Verständnis der jeweilige Querschnitt des Roh-Holzprofils 2' an verschiedenen Positionen entlang der Vorrichtung dargestellt. Fig. 2 zeigt den Schnitt A - A, Fig. 3 den Schnitt B - B, Fig. 4 Schnitt C - C und Fig. 5 den Schnitt D - D.

In Fig. 2 ist der Pressquerschnitt 20 an der Position A - A des Pressmittels 10 gezeigt. Die symbolisch gestrichelt eingezeichneten Furnierlagen 4 (größere Striche) und Klebelagen 6 (kleinere Striche) werden erkennbar flach - d. h. ohne Krümmung - in den Pressquerschnitt aufgenommen. Lediglich in hoch Richtung bezüglich der Darstellung werden die einzelnen Lagen 4 und 6 durch die Begrenztheit des Pressabstands 21 des Pressquerschnitt 20 einander gepresst. Der Pressquerschnitt 20 weist an der Position A - A also eine rechteckige Form auf, wobei die Hocherstreckung des Rechtecks den Pressabstand 21 darstellt.

Der Pressquerschnitt 20 wird durch das obere, zweite Presswerkzeug 16 und das untere, erste Presswerkzeug 18 begrenzt. Seitlich ist zwischen den Rändern der Furnierlagen 4 und der seitlichen Begrenzung des Pressquerschnitt 20 im dargestellten Ausführungsbeispiel jeweils ein Spiel. In einem anderen Ausführungsbeispiel kann jedoch genauso vorgesehen sein, dass der Pressquerschnitt 20 auch seitlich durch direkten Kontakt die zugeführten Furnierlagen 4 führt.

In Fig. 3 ist der Pressquerschnitt 20 an der Position B - B des Pressmittels 10 gezeigt. An dieser Position erfolgte durch die Forderung senkrecht zur dargestellten Ebene (aus dem Blatt heraus) bereits eine Biegung um eine Biegeachse B, die im Ausführungsbeispiel zu der Arbeitsachse 14 parallel ist.

In Fig. 4 ist der Pressquerschnitt 20 an der Position C - C des Pressmittels dargestellt. An dieser Position ist die gewünschte Biegung um die Biegeachse B bereits abgeschlossen. Das Roh-Holzprofil 2' weist bereits die gewünschte Endkontur auf, zumindest abgesehen von einer eventuell gewünschten Nachbearbeitung der Flächen und Seitenkanten.

In Fig. 5 ist ein Profilquerschnitt 19 des Roh-Holzprofils 2' an der Position D - D gezeigt, nachdem mittels der ersten Spaneinrichtung 30 im Bereich der Seitenkanten ein Teil der Wandstärke abgenommen wurde, damit diese Seitenkanten definiert als Fügekanten 36 ausgebildet sind und beispielsweise als Verbindungselement für eine weiteres Holzprofil 2 dienen können.

In Fig. 6 ist ein Ausschnitt des Roh-Holzprofils 2' aus Fig. 5 entlang der Schnittlinie E - E dargestellt. Die Darstellung zeigt also einen Längsschnitt entlang eines der Schenkel des Roh-Holzprofils 2'. Aus dieser Darstellung ist ersichtlich, welche Bestandteile das nach einer beispielhaften Ausführung der Erfindung ausgebildete Roh-Holzprofil 2 (vgl. Fig. 7) aufweist.

Es handelt sich um eine hochwertige Ausführung eines herzustellenden Holzprofils 2, wobei die beiden äußeren Furnierlagen 4.1 und 4.3 aus einem hochwertigen Furnier, hier Walnuss, ausgebildet sind. Die mittlere Furnierlage 4.2 ist aus einem Standardfurnier, hier Buche, ausgebildet.

Zwischen den Furnierlagen 4.1 und 4.2 sowie 4.2 und 4.3 ist jeweils eine ausgehärtete Klebeverbindung mit den Klebelagen 6.1 bzw. 6.2 ausgebildet. Die Klebelagen sind im Ausführungsbeispiel mit einem umweltfreundlichen Klebstoff auf Zuckerbasis ausgebildet, können aber genauso mit einem Harnstoff-Formaldehyd-Klebstoff ausgebildet sein.

Selbst verständlich können in analogen Ausführungsbeispielen Holzprofile 2 mit beliebigen Kombinationen von Hölzern und Klebstoffen, die für den Fachmann geläufigerweise kompatibel sind, mit der beispielhaften Vorrichtung, insbesondere unter Durchführung des beispielhaften Verfahrens, hergestellt werden.

In Fig. 7 ist das Holzprofil 2, dessen Herstellung in den Figuren 1 bis 5 beschrieben wurde, komplett dargestellt, nachdem es vom Roh-Holzprofil 2' mittels der zweiten Spaneinrichtung 34 abgelängt wurde.

Das Holzprofil 2 weist eine Längserstreckung L von wenigstens 180 cm, insbesondere von wenigstens 200 cm oder von wenigstens 250 cm, auf, sowie einen U-förmigen Profilquerschnitt 19. Derart lange Holzprofile 2 aus mehreren Furnierlagen 4 mit einem entlang der Längserstreckung L konstanten Profilquerschnitt 19 sind durch das vorgestellte beispielhafte Verfahren nun mit fast beliebigen Profilquerschnitten herstellbar, und durch die kontinuierliche Art des Verfahrens insbesondere auch unter wirtschaftlich vorteilhaften Bedingungen.

Das hier gezeigte Holzprofil 2 weist - entsprechend Oberflächenunebenheiten an der Begrenzung des Pressquerschnitt 20 - zwei Schleifspuren 38 (38.1 und 38.2) auf, die entlang der gesamten Längserstreckung L an einer Profilkontur 23 des Profilquerschnitts 19 des Holzprofils 2 verlaufen. Diese Schleifspuren sind für bestimmte Anwendungen nicht unerwünscht, und können vielmehr eine handwerkliche Anmutung des Holzprofils 2 bedingen. Wenn Sie unerwünscht sind, können Sie aber durch ausreichend tiefes Abschleifen - beispielsweise mittels der Bearbeitungseinrichtung 32 - vom Holzprofil 2 entfernt werden.

### BEZUGSZEICHENLISTE

- 1: Vorrichtung
- 2: Holzprofil
- 2': Roh-Holzprofil (ab Beginn des Pressens, vor dem Ablängen)
- 3: Fundament
- 4: Furnierlage
- 4.1: Furnierlage
- 4.2: Furnierlage
- 4.3: Furnierlage
- 5: Verbindungsseite einer Furnierlage
- 6: Furnierrolle
- 6.1: Klebelage
- 6.2: Klebelage
- 7: Furnierspeicher
- 8: Klebstofflage
- 10: Pressmittel
- 12: Fördereinrichtung
- 14: Arbeitsrichtung
- 16: zweites Presswerkzeug
- 18: erstes Presswerkzeug
- 19: Profilquerschnitt
- 20: Pressquerschnitt
- 21: Pressabstand
- 22: Pressstrecke
- 23: Profilkontur
- 24: Heizung
- 26: Kühlung
- 28: Arbeitsstrecke
- 30: erste Spaneinrichtung (insbesondere zum Kantenschneiden)
- 32: Bearbeitungseinrichtung
- 34: zweite Spaneinrichtung (insbesondere zum Ablängen)
- 36: Fügekante
- 38: Schleifspur
- 38.1: Schleifspur
- 38.2: Schleifspur
- L: Längserstreckung des Holzprofils
- B: Biegeachse

## Patentansprüche

1. Verfahren zum Herstellen eines Holzprofils (2) mit zwei oder mehr Holz-Furnierlagen (4), aufweisend die Verfahrensschritte:
- Anordnen der Furnierlagen (4) aufeinander,
- Bereitstellen eines Klebstoffes (8) an den Furnierlagen (4),
- Verkleben der Furnierlagen (4), indem Verbindungsseiten (5) der Furnierlagen (4) mittels eines Pressmittels (10) aneinandergepresst werden,
- Fördern der Furnierlagen (4) entlang einer Arbeitsrichtung (14) des Pressmittels (10) während des Pressens, **dadurch gekennzeichnet, dass** die Furnierlagen (4) während der Förderung an einer Pressstrecke (22) des Pressmittels (10) um wenigstens eine Biegeachse (B) gebogen werden und die Furnierlagen (4) entlang der Arbeitsrichtung (14) des Pressmittels (10) durch wenigstens einen Pressquerschnitt (20) des Pressmittels (10) gefördert werden, der sich entlang wenigstens eines Teils der Pressstrecke (22) erstreckt und entlang der Arbeitsrichtung (14) sich verändernd ausgebildet ist.

2. Verfahren gemäß Anspruch 1,
**dadurch gekennzeichnet, dass**
wenigstens zwei Furnierlagen (4.1, 4.2, 4.3) mit unmittelbar aneinander anliegenden Verbindungsseiten (5) aufeinander angeordnet werden.

3. Verfahren gemäß einem der vorhergehenden Ansprüche,
**dadurch gekennzeichnet, dass**
wenigstens zwei Furnierlagen mit mittelbar aneinander anliegenden Verbindungsseiten (5) aufeinander angeordnet werden.

4. Verfahren gemäß einem der vorhergehenden Ansprüche,
**dadurch gekennzeichnet, dass**
das Biegen der Furnierlagen (4) um die wenigstens eine Biegeachse (B) aufgrund einer Veränderung des Pressquerschnitts (20) entlang der Pressstrecke (22) erfolgt.

5. Verfahren gemäß einem der vorhergehenden Ansprüche,
**dadurch gekennzeichnet, dass**
die Furnierlagen (4) entlang der Pressstrecke (22) geheizt und/oder, ggf. anschließend an ein Heizen, gekühlt werden.

6. Verfahren gemäß einem der vorhergehenden Ansprüche,
**dadurch gekennzeichnet, dass**
jede der Furnierlagen (4) aus einem Furnierspeicher (7) kontinuierlich zugeführt wird.

7. Verfahren gemäß einem der vorhergehenden Ansprüche,
**dadurch gekennzeichnet, dass**
die Furnierlagen (4) mittels des Pressmittels (10) in Arbeitsrichtung (14) gefördert werden.

8. Verfahren gemäß einem der vorhergehenden Ansprüche,
**dadurch gekennzeichnet, dass**
ein aus dem Pressquerschnitt (20) am Ende der Pressstrecke (22) aus dem Pressmittel (10) herausragendes Roh-Holzprofil (2') mittels einer Fördereinrichtung (12) in Arbeitsrichtung (14) gefördert wird.

9. Verfahren gemäß einem der vorhergehenden Ansprüche,
**dadurch gekennzeichnet, dass**
das Roh-Holzprofil (2') bezüglich der Arbeitsrichtung (14) nach dem Pressmittel (10) an wenigstens einer Seitenkante mit einer vorbestimmten Kantenkontur beschnitten wird.

10. Vorrichtung (1) zum Herstellen eines Holzprofils (2) mit zwei oder mehr Holz-Furnierlagen (4), aufweisend
- ein Pressmittel (10) zum Aneinanderpressen und damit Verkleben der Furnierlagen (4) sowie zum Biegen der Furnierlagen (4) um wenigstens eine Biegeachse (B),
- eine Fördereinrichtung (12) zum Fördern der Furnierlagen (4) in der Vorrichtung (1),
wobei das Pressmittel (10) zusätzlich als Fördereinrichtung ausgebildet ist, und/oder die Fördereinrichtung bezüglich einer Arbeitsrichtung (14) der Vorrichtung (1) nach dem Pressmittel (10) angeordnet ist, und dazu eingerichtet ist, die Furnierlagen (4) durch das Pressmittel (10) zu fördern,
**dadurch gekennzeichnet, dass**
das Pressmittel (10) einen Pressquerschnitt (20) aufweist, der sich entlang wenigstens eines Teils einer Pressstrecke (22) erstreckt und durch welchen hindurch die Furnierlagen (4) förderbar sind, wobei sich der Pressquerschnitt hinsichtlich der Arbeitsrichtung entlang einer Pressstrecke (22) verändert.

11. Vorrichtung (1) gemäß Anspruch 10,
**dadurch gekennzeichnet, dass**
das Pressmittel wenigstens einen Pressabstand (21) aufweist, der sich entlang wenigstens eines Teils einer Pressstrecke (22) erstreckt und durch welchen hindurch die Furnierlagen (4) förderbar sind.

12. Vorrichtung (1) gemäß Anspruch 10 oder 11,
**dadurch gekennzeichnet, dass**
sich der Pressabstand hinsichtlich der Arbeitsrichtung (14) entlang der Pressstrecke verändert.

13. Holzprofil (2) mit zwei oder mehr Holz-Furnierlagen (4), aufweisend eine Längserstreckung (L) und einen entlang der Längserstreckung zumindest im wesentlichen gleichbleibenden Profilquerschnitt (19), der wesentlich von einem Rechteck abweicht,
**dadurch gekennzeichnet, dass**
- die Längserstreckung wenigstens 150 Zentimeter, insbesondere wenigstens 200 Zentimeter, wenigstens 250 Zentimeter oder wenigstens 300 Zentimeter beträgt, und/oder
- das Holzprofil (2) eine aus einer Profilkontur (23) erhabene oder in diese eingebrachte Schleifspur (38) aufweist, die entlang zumindest im Wesentlichen der gesamten Längserstreckung an der gleichen Position an der Profilkontur des Profilquerschnitts angeordnet ist.

14. Holzprofil (2) gemäß Anspruch 13,
**dadurch gekennzeichnet, dass**
zwei Furnierlagen (4), die eine einander entsprechende Faserausrichtung aufweisen, an unterschiedlichen Positionen der Längserstreckung des Holzprofils (2) jeweils eine Fügestelle benachbarter Furnierteile aufweisen.

## Claims

1. A method for manufacturing a wooden profile (2) comprising two or more layers of wood veneer (4), comprising the method steps:
- arranging the veneer layers (4) on top of one another,
- applying an adhesive (8) to the veneer layers (4),
- bonding the veneer layers (4), by pressing the joining edges (5) of the veneer layers (4) together by means of a pressing device (10),
- Conveying the veneer layers (4) along a working direction (14) of the pressing means (10) during pressing, **characterized in that**
the veneer layers (4) are bent about at least one bending axis (B) during conveyance along a pressing path (22) of the pressing means (10) and the veneer layers (4) are conveyed along the working direction (14) of the pressing means (10) through at least one pressing cross-section (20) of the pressing means (10), which extends along at least a portion of the pressing path (22) and is configured to vary along the working direction (14).

2. A method according to claim 1,
**characterized in that**
at least two veneer layers (4.1, 4.2, 4.3) are arranged one on top of the other with their joining sides (5) in direct contact with one another.

3. A method according to one of the preceding claims,
**characterized in that**
at least two veneer layers are arranged one on top of the other with their joining sides (5) in indirect contact with one another.

4. A method according to one of the preceding claims,
**characterized in that**
the bending of the veneer layers (4) about the at least one bending axis (B) is effected by a change in the pressing cross-section (20) along the pressing path (22).

5. A method according to one of the preceding claims,
**characterized in that**
the veneer layers (4) are heated along the pressing path (22) and/or, where appropriate, cooled following heating.

6. A method according to one of the preceding claims,
**characterized in that**
each of the veneer layers (4) is fed continuously from a veneer storage unit (7).

7. A method according to one of the preceding claims,
**characterized in that**
the veneer layers (4) are conveyed in the working direction (14) by means of the pressing means (10).

8. A method according to one of the preceding claims,
**characterized in that**
a raw wooden profile (2') protruding from the pressing means (10) at the end of the pressing path (22) is conveyed in the working direction (14) by means of a conveying device (12).

9. A method according to one of the preceding claims,
**characterized in that**
the raw wooden profile (2') is trimmed relative to the working direction (14) downstream of the pressing means (10) at at least one side edge to a predetermined edge contour.

10. Apparatus (1) for manufacturing a wooden profile (2) comprising two or more wood veneer layers (4), comprising
- a pressing means (10) for pressing the veneer layers (4) together and thereby bonding them, and for bending the veneer layers (4) about at least one bending axis (B),
- a conveyor (12) for conveying the veneer layers (4) within the apparatus (1),
wherein the pressing means (10) is additionally designed as a conveying device, and/or the conveying device is arranged downstream of the pressing means (10) relative to a working direction (14) of the apparatus (1), and is adapted to convey the veneer layers (4) through the pressing means (10),
**characterized in that**
the pressing means (10) has a pressing cross-section (20) which extends along at least part of a pressing path (22) and through which the veneer layers (4) can be conveyed, the pressing cross-section varying along a pressing path (22) with respect to the working direction.

11. Apparatus (1) according to claim 10,
**characterized in that**
the pressing means comprises at least one pressing gap (21) which extends along at least part of a pressing path (22) and through which the veneer layers (4) can be conveyed.

12. Apparatus (1) according to claim 10 or 11,
**characterized in that**
the pressing gap varies along the pressing path relative to the working direction (14).

13. A wooden profile (2) comprising two or more layers of wood veneer (4), having a longitudinal extent (L) and a profile cross-section (19) which remains at least substantially constant along the longitudinal extent and which deviates significantly from a rectangle, **characterized in that**
- the longitudinal dimension is at least 150 centimeters, in particular at least 200 centimeters, at least 250 centimeters or at least 300 centimeters, and/or
- the wooden profile (2) has a grinding mark (38) raised from or incorporated into a profile contour (23), which is arranged at the same position on the profile contour of the profile cross-section along at least substantially the entire length.

14. Wooden profile (2) according to claim 13,
**characterized in that**
two veneer layers (4), which have a corresponding fiber orientation, each have a joint between adjacent veneer sections at different positions along the length of the wooden profile (2).

## Revendications

1. Procédé de fabrication d'un profilé en bois (2) comportant deux ou plusieurs feuilles de placage en bois (4), comprenant les étapes consistant à :
- superposer les feuilles de placage (4),
- fournir une colle (8) sur les feuilles de placage (4),
- coller les feuilles de placage (4) en pressant les faces de jonction (5) des feuilles de placage (4) les unes contre les autres à l'aide d'un moyen de pressage (10),
- transporter les feuilles de placage (4) le long d'une direction de travail (14) du moyen de pressage (10) pendant le pressage,
**caractérisé en ce que**, pendant le transport, les feuilles de placage (4) sont cintrées autour d'au moins un axe de cintrage (B) au niveau d'un parcours de pressage (22) du moyen de pressage (10), et les feuilles de placage (4) sont transportées le long de la direction de travail (14) du moyen de pressage (10) à travers au moins une section transversale de pressage (20) du moyen de pressage (10), laquelle s'étend le long d'une partie au moins du parcours de pressage (22) et dont la configuration varie le long de la direction de travail (14).

2. Procédé selon la revendication 1,
**caractérisé en ce qu'**au moins deux feuilles de placage (4.1, 4.2, 4.3) sont superposées avec leurs faces de jonction (5) en contact direct les unes avec les autres.

3. Procédé selon l'une des revendications précédentes,
**caractérisé en ce qu'**au moins deux feuilles de placage sont superposées avec leurs faces de jonction (5) en contact indirect les unes avec les autres.

4. Procédé selon l'une des revendications précédentes,
**caractérisé en ce que** le cintrage des feuilles de placage (4) autour d'au moins un axe de cintrage (B) s'effectue grâce à une variation de la section transversale de pressage (20) le long du parcours de pressage (22).

5. Procédé selon l'une des revendications précédentes,
**caractérisé en ce que** les feuilles de placage (4) sont chauffées le long du parcours de pressage (22) et/ou, le cas échéant après un chauffage, sont refroidies.

6. Procédé selon l'une des revendications précédentes,
**caractérisé en ce que** chacune des feuilles de placage (4) est acheminée en continu à partir d'un réservoir de feuilles de placage (7).

7. Procédé selon l'une des revendications précédentes,
**caractérisé en ce que** les feuilles de placage (4) sont transportées dans la direction de travail (14) à l'aide du moyen de pressage (10).

8. Procédé selon l'une des revendications précédentes,
**caractérisé en ce qu'**un profilé en bois brut (2') dépassant de la section transversale de pressage (20) à l'extrémité du parcours de pressage (22) hors du moyen de pressage (20) est transporté dans la direction de travail (14) à l'aide d'un dispositif de transport (12).

9. Procédé selon l'une des revendications précédentes,
**caractérisé en ce qu'**en aval du moyen de pressage (10) par rapport à la direction de travail (14), le profilé en bois brut (2') est découpé sur au moins un bord latéral selon un contour de bord prédéterminé.

10. Dispositif (1) destiné à la fabrication d'un profilé en bois (2) comportant deux ou plusieurs feuilles de placage en bois (4), comprenant
- un moyen de pressage (10) destiné à presser les feuilles de placage (4) les unes contre les autres et ainsi à les coller, ainsi qu'à cintrer les feuilles de placage (4) autour d'au moins un axe de cintrage (B),
- un dispositif de transport (12) destiné à transporter les feuilles de placage (4) dans le dispositif (1),
le moyen de pressage (10) étant en outre conçu comme un dispositif de transport, et/ou le dispositif de transport étant disposé en aval du moyen de pressage (10) par rapport à une direction de travail (14) du dispositif (1), et étant agencé pour transporter les feuilles de placage (4) à travers le moyen de pressage (10),
**caractérisé en ce que** le moyen de pressage (10) présente une section transversale de pressage (20) qui s'étend le long d'une partie au moins d'un parcours de pressage (22) et à travers laquelle les feuilles de placage (4) peuvent être transportées, la section transversale de pressage variant le long d'un parcours de pressage (22) par rapport à la direction de travail.

11. Dispositif (1) selon la revendication 10,
**caractérisé en ce que** le moyen de pressage présente au moins un écartement de pressage (21) qui s'étend le long d'une partie au moins d'un parcours de pressage (22) et à travers lequel les feuilles de placage (4) peuvent être transportées.

12. Dispositif (1) selon la revendication 10 ou 11,
**caractérisé en ce que** l'écartement de pressage varie le long du parcours de pressage par rapport à la direction de travail (14).

13. Profilé en bois (2) comportant deux ou plusieurs feuilles de placage (4) en bois, présentant une extension longitudinale (L) et une section transversale de profilé (19) qui reste au moins sensiblement constante le long de cette extension longitudinale et qui diffère sensiblement d'un rectangle,
**caractérisé en ce que**
- l'extension longitudinale est d'au moins 150 centimètres, en particulier d'au moins 200 centimètres, d'au moins 250 centimètres ou d'au moins 300 centimètres, et/ou
- le profilé en bois (2) présente une trace de ponçage (38) en relief par rapport au contour de profilé (23) ou creusée dans celui-ci, qui est disposée à la même position sur le contour de la section transversale du profilé, sur au moins la quasi-totalité de l'extension longitudinale.

14. Profilé en bois (2) selon la revendication 13,
**caractérisé en ce que** deux feuilles de placage (4), présentant des orientations de fibres correspondantes l'une à l'autre, comportent chacune, à des positions différentes de l'extension longitudinale du profilé en bois (2), un point de jonction entre des parties de placage adjacentes.
